# EUROPÄISCHE PATENTANMELDUNG

(11) **EP 1 145 673 A2**
(43) Veröffentlichungstag der Anmeldung: **17.10.2001**
(21) Anmeldenummer: 01109120.4
(22) Anmeldetag: 12.04.2001
(51) Int. Cl.: A47J 27/00, A47J 37/07

(54) **Gargerät**

(30) Priorität: 14.04.2000 DE 20006962 U
(71) Anmelder: Synkrona AG, 6370 Stans (CH)
(72) Erfinder: Ryser, Theophil, 6375 Beckenried (CH)
(74) Vertreter: Blumbach, Kramer & Partner GbR

(57) **Zusammenfassung**

Gargerät mit einer Bodenschale und einer Haube, bei welchem die Bodenschale einen Boden aufweist, dass die Bodenschale (1, 30) mit deren Boden (2) auf die Haube (7, 70) stellbar ist.

Gestell, insbesondere für ein Gargerät nach einem der Ansprüche 1 bis 20, mit wenigstens zwei Beinen und mit einem, zum Führen der Beine ausgebildeten Führungselement, wobei die Beine einen Standabschnitt und einen, dem Standabschnitt gegenüberliegenden Aufnahmeabschnitt aufweisen, dass die Beine (51) von dem jeweils zwischen dem Standabschnitt (51d) und dem Aufnahmeabschnitt (51e) vorgesehenen Führungselement (56) umgeben sind, und dass die Beine (51) durch eine Schwenkbewegung um das Führungselement (56) aus einer Transportstellung in eine Standstellung bringbar sind.

## Beschreibung

Die Erfindung betrifft ein Gargerät und ein Gestell gemäß der im Oberbegriff der Ansprüche 1 und 21 angegebenen Gattungen sowie eine Grilleinrichtung gemäß Anspruch 30.

Derartige Gargeräte sowie Grilleinrichtungen sind schon seit langem bekannt und dienen der Zubereitung von warmen Mahlzeiten. Insbesondere werden mit Grilleinrichtungen tierische Lebensmittel, wie Fleisch etwa in Form von Steaks oder Würstchen gegrillt. Dabei wird in einer Feuerschale Holzkohle entflammt, und die zuzubereitenden Lebensmittel auf einem Grillrost erwärmt bzw. gegart, welcher in einem veränderbaren Abstand positionierbar ist. Zusätzlich befindet sich eine als Windschutz dienende Seitenwand um zumindest eine Hälfte des in der Regel kreisförmig gestalteten Grilleinrichtung. Bei diesen Grilleinrichtungen ist die Bodenschale in der Regel fest an einem Gestell montiert.

Daneben gibt es aber auch solche Grilleinrichtungen, die etwa auf einem Tisch benutzt werden können. Bei beiden Typen von Grilleinrichtungen führt die Feuerung in der Feuerschale zu einer großen Erwärmung der gesamten Einrichtung, was insbesondere in Gegenwart von Kindern ein hohes Maß an Sicherheit erfordert. So besteht das Problem, dass bei bekannten Grilleinrichtungen diese in der Regel nur in einem Sicherheitsabstand von Personen aufgestellt werden können bzw. auf feuerfesten Unterlagen wie etwa einem Steinfußboden oder einer nicht entflammbaren Tischplatte benutzbar sind. Hier ergibt sich aber der besondere Nachteil, dass bei einer Positionierung auf einer nicht entflammbaren Tischplatte dennoch eine Berührung der an diesem Tisch sitzenden Personen mit der Feuerschale zu Verbrennungen führen kann.

Auch bei Gargeräten, welche als Kochtopf oder Wok ausgeführt sind, ergibt sich das Problem, dass diese mit der auf einer Herdplatte beheizbaren Unterseite nicht direkt auf eine gewöhnliche Tischplatte gestellt werden können. Auch ist hier besondere Vorsicht geboten, um eine Berührung der stark erhitzten Unter- und Seitenfläche durch einen größeren Sicherheitsabstand auszuschließen.

Werden Gargeräte und/oder Grilleinrichtungen von einem Gestell getragen, so ergeben sich die folgenden Probleme. Zum einen ist ein Gestell, das eine ausreichende Stabilität und damit verbunden Sicherheit gegen Umkippen gewährleistet oft sehr unhandlich und schwierig aufzustellen. Ein solches Gestell erfordert selbst in einem deaktiven, etwa zusammengeklappten Zustand noch einen sehr großen Raumbedarf. Dadurch wird der Transport eines solchen Gestelles erschwert. Bekannte, gut zu transportierende Gestelle weisen häufig den Nachteil mangelnder Stabilität auf. Auch tritt bei solchen Gestellen der Nachteil einer doch sehr zeitintensiven Montage auf.

Daher ist es Aufgabe der vorliegenden Erfindung, ein Gargerät, eine Grilleinrichtung und ein Gestell bereitzustellen, welche bei Gewährleistung einer ausreichenden Sicherheit dennoch einfach aufstellbar bzw. benutzbar sind.

Die Aufgabe wird ausgehend von den im Oberbegriff der Ansprüche 1 und 21 angegebenen Merkmalen von den kennzeichnenden Merkmalen dieser Ansprüche gelöst.

Die Erfindung bringt den Vorteil mit sich, dass das Gargerät vielseitig und sicher benutzbar ist. So können eine Bodenschale und eine Haube mit ihren Außenseiten so aufeinandergesetzt werden, dass die Haube die Bodenschale stabil trägt. Dabei wirkt ein von der Haube umgebener Hohlraum als Luftpolster. So wird eine zu große Abkühlung der Bodenschale bei gleichzeitiger Isolierung von Bodenschale und Aufstellfläche vermieden. Des Weiteren ergibt sich der Vorteil, dass Beine des erfindungsgemäßen Gestells unabhängig von ihrem Funktionszustand immer miteinander verbunden sind, so dass ein einzelnes Bein nicht verloren gehen kann.

Weitere vorteilhafte Merkmale ergeben sich aus den Unteransprüchen.

Das erfindungsgemäße Gargerät weist eine Bodenschale mit einem Boden und eine Haube auf, wobei die Bodenschale mit deren Boden auf die Haube stellbar ist. Erfindungsgemäß ist die Haube dabei mit einem oberen Abschnitt mit dem Boden formschlüssig verbindbar. Hier ergibt sich der Vorteil, dass die heiße Bodenschale von der nicht direkt erwärmten und somit kälteren Haube aufgenommen wird und dadurch etwa auf einem Tisch plaziert werden kann.

Die Erfindung sieht auch vor, ein Halteelement an der Haube, vorzugsweise an deren oberem Abschnitt zu befestigen. Mit dem Halteelement kann ein Verbindungselement, welches an dem Boden der Bodenschale vorgesehen ist, kraftschlüssig verbunden werden. In einer Ausführungsform der Erfindung ist der Boden als ebene Fläche ausgebildet, in deren Mitte das Verbindungselement angebracht ist. Weiterhin kann das Verbindungselement als Teil eines Bajonett-Haltesystems ausgebildet sein. Auch denkbar ist es, das Verbindungselement als Bügel auszubilden, welcher mit dem Halteelement in kraftschlüssigen Eingriff bringbar ist. Ebenso kann das Verbindungselement als Bohrung ausgebildet sein, in welche eine Schraube eingesetzt ist, und das Halteelement einen Innengewindeabschnitt umfasst, welcher an der Haube befestigt ist.

Die kraftschlüssige Verbindung von Verbindungselement und Halteelement verleiht der Anordnung von Bodenschale und Haube ein hohes Maß an Sicherheit. Auch verhindert die kraftschlüssige Verbindung ein, etwa durch eine Berührung ausgelöstes Verrutschen der Bodenschale auf der Haube.

Die erfindungsgemäße Bodenschale und die Haube weisen vorzugsweise einen kreisförmigen Querschnitt auf, was die Verwendung des Gargerätes auf einer herkömmlichen Herdplatte erleichtert. Die Bodenschale und die Haube sind vorzugsweise aus Metallen oder metallenen Legierungen wie Stahl oder Edelstahl hergestellt. Insbesondere ist die Bodenschale aus hochtemperaturfesten Materialien gebildet.

Auch kann der obere Abschnitt der Haube als hitzebeständiger Abschnitt ausgebildet sein. In einer besonders bevorzugten Ausführungsform ist die Haube dann als Wok ausgebildet. Dadurch ergibt sich die Multifunktionalität des erfindungsgemäßen Gargerätes als besonderer Vorteil.

Auch kann der obere Abschnitt einen nach innen gewölbten ersten Bereich aufweisen, welcher von einem kragenartigen zweiten Bereich umgeben ist. Ebenso kann der Boden einen nach innen gewölbten ersten Bodenabschnitt aufweisen, welcher von einem kragenartigen zweiten Bodenabschnitt umgeben ist. Die erfindungsgemäße Bodenschale ist mit dem kragenartigen zweiten Bodenabschnitt auf den kragenartigen zweiten Bereich der Haube stellbar. Das Gargerät nach der Erfindung umfasst ein Griffelement für die Haube, welches in bevorzugter Ausführung mit dem Halteelement verbindbar ist. Auch kann das Griffelement kraftschlüssig mit dem Halteelement verbindbar sein.

Die Erfindung sieht vor, das Gargerät als Grill auszubilden, wobei die Bodenschale als Feuerschale ausgeführt ist. Dabei kann vorteilhaft die Befeuerung in der Bodenschale in einer bei einem Grillvorgang üblichen Art und Weise durchgeführt werden. Durch das Aufsetzen der Bodenschale auf die Haube ist ein Brat- oder Röstvorgang von Nahrungsmitteln direkt auf einem Tisch, der zum Speisen bestimmt ist, möglich.

Mit besonderem Vorteil sieht die Erfindung die Befestigung des Gargerätes an einem Gestell vor. Dazu sind an der Bodenschale des Gargerätes Befestigungselemente vorgesehen. Somit kann das erfindungsgemäße Gargerät sowohl auf einer Unterlage, etwa auf einem Tisch als auch freistehend, etwa im Garten benutzt werden.

Die Erfindung sieht ein Gestell, insbesondere für ein Gargerät mit wenigstens zwei Beinen und mit einem, zum Führen der Beine ausgebildeten Führungselement vor. Die Beine weisen einen Standabschnitt und einen, dem Standabschnitt gegenüberliegenden Aufnahmeabschnitt auf. Dabei sind die Beine von dem jeweils zwischen dem Standabschnitt und dem Aufnahmeabschnitt vorgesehenen Führungselement umgeben und können durch eine Schwenkbewegung um das Führungselement aus einer Transportstellung in eine Standstellung gebracht werden. Im Transportzustand sind die Beine parallel zueinander angeordnet. Im Tragezustand können die Standabschnitte und die Aufnahmeabschnitte jeweils voneinander weggeschwenkt sein. Besonders vorteilhaft ist es, dass die Beine ohne Einsatz von Spezialwerkzeug, vorzugsweise durch Handbetätigung vom Transport- in den Tragezustand bringbar sind.

Erfindungsgemäß ist das Führungselement als Manschette ausgebildet, welche vorzugsweise drei Beine in einem von dieser definierten Durchgang aufnimmt. In einer bevorzugten Ausführungsform weist die Manschette einen dreieckigen Durchgang auf. Die Manschette ist als Stanzteil mit umgebogenem Rand ausgebildet, wobei der Rand Bohrungen zur Aufnahme eines Befestigungssteges der Beine aufweist. Vorteilhafterweise sind die Beine rohrförmig und der Aufnahmeabschnitt als zur Längsachse stumpfwinkelig verlaufende Schnittfläche ausgebildet. Der Aufnahmeabschnitt kann erfindungsgemäß einen die Mantelfläche des Beines senkrecht zur Längsachse durchsetzenden Durchgang aufweisen, wobei der Durchgang zur Aufnahme eines Befestigungsmittels ausgebildet ist. Erfindungsgemäß wird somit eine feste Verbindung von Gestell und dem zu tragenden Gegenstand erzielt.

Die Erfindung sieht vor, das Gestell so auszubilden, dass es in der Standstellung ein Gargerät aufnehmen kann. So umfasst die Erfindung auch, ein Gargerät und ein Gestell. Mit besonderem Vorteil kann die Kombination von Gargerät und Gestell an einem beliebigen Ort zum Garen von Lebensmitteln eingesetzt werden.

Die Erfindung wird nachfolgend anhand der beiliegenden Zeichnungen an mehreren Ausführungsbeispielen näher erläutert. Dabei sind gleiche Teile mit den gleichen Bezugszeichen gekennzeichnet. Es zeigen:
- Fig. 1a: einen teilweisen Schnitt durch ein erfindungsgemäßes Gargerät;
- Fig. 1b: einen Schnitt durch eine zweite Ausführungsform des erfindungsgemäßen Gargerätes;
- Fig. 2: einen teilweisen Schnitt nach Fig. 1a durch eine weitere erfindungsgemäße Ausführungsform;
- Fig. 3: ein von einem erfindungsgemäßen Gestell gehaltenes erfindungsgemäßes Gargerät in einer Rückansicht;
- Fig. 4: den mit A gekennzeichneten Bereich der Fig. 3 in einer vergrößerten Seitenansicht;
- Fig. 5: den mit B gekennzeichneten der Fig. 3 in einem vergrößerten Maßstab;
- Fig. 6: einen Schnitt entlang der Linie VI-VI in Fig. 3;
- Fig. 7: eine teilweise Vorderansicht des erfindungsgemäßen Gestells um ein Führungselement im Transportzustand und
- Fig. 8: eine ausschnittsweise Seitenansicht von rechts des erfindungsgemäßen Gestells nach Fig. 7.

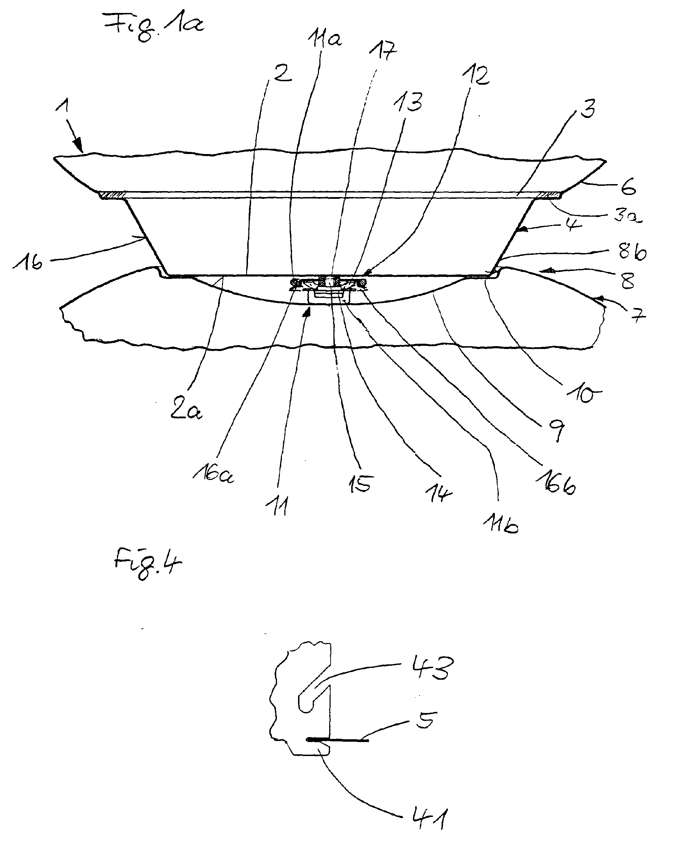

Nach Fig. 1a weist eine im Querschnitt vorzugsweise kreisförmige Bodenschale 1 eines erfindungsgemäßen Gargerätes einen ebenen Boden 2 auf. Eine Bodenaußenseite 2a und eine stumpfwinklig von der Bodenaußenseite 2a abgehende Umrandung 1b bilden mit einem Absatz 3 einen im Querschnitt trapezförmigen unteren Schalenbereich 4.

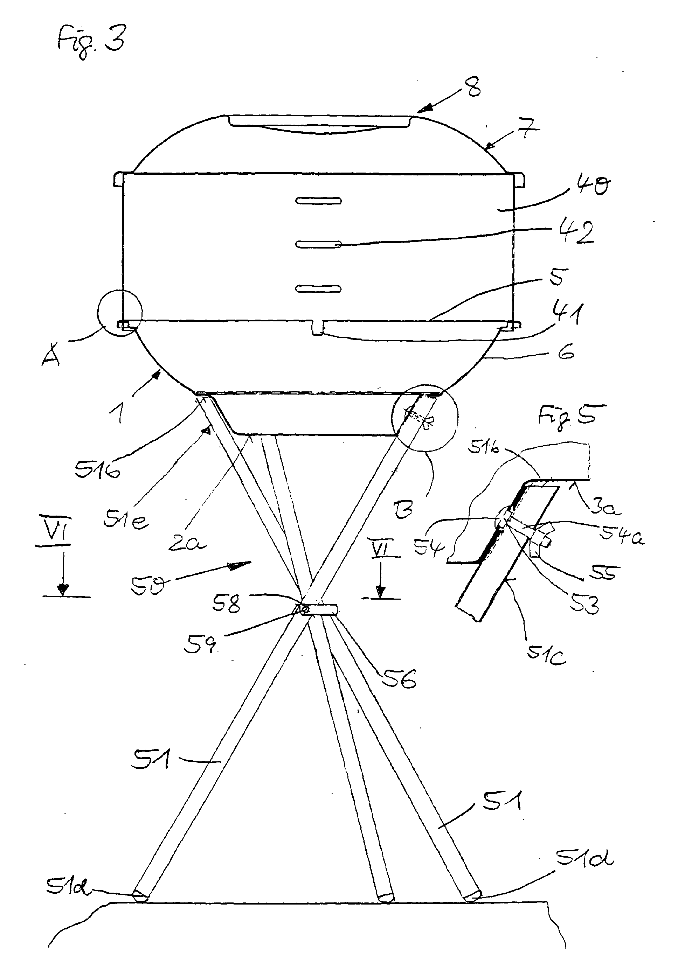

Der Absatz 3 steht mit einem Abschnitt 3a über den unteren Schalenbereich nach außen über. Vom Absatz 3 in Richtung auf eine vom Boden 2 abgewandte offene Oberseite 5 (in Fig. 3 gezeigt) verbreitert sich ein oberer Schalenabschnitt 6.

Nach Fig. 1a weist eine vorzugsweise ebenfalls mit kreisförmigem Querschnitt ausgebildete Haube 7 des erfindungsgemäßen Gargerätes einen oberen Abschnitt 8 auf. Der obere Abschnitt 8 enthält dabei einen ersten, nach innen gewölbten Bereich 9 auf, welcher von einem kragenartig verlaufenden zweiten Bereich 10 eingefasst ist.

Erfindungsgemäß kann die Haube 7 mit ihrer auch zur Abdeckung der Bodenschale 1 bestimmten Unterseite auf eine Unterlage gestellt werden. Die Bodenschale kann dann mit dem Boden 2 darauf aufgesetzt werden. Erfindungsgemäß sind die Bodenaußenseite 2a der Bodenschale 1 und der obere Abschnitt 8 der Haube 7 dabei formschlüssig miteinander verbunden. Dazu nimmt der kragenartige zweite Bereich 10 den Boden 2 tragend auf. Die Umrandung 1b grenzt dabei erfindungsgemäß an eine parallel dazu verlaufende Fläche 8b des oberen Abschnitts 8 der Haube 7 an.

In der Mitte des gewölbten Bereiches 9 der Haube 7 ist an der Außenseite der Haube 7 ein Halteelement 11 angebracht. Das Halteelement 11 ist vorzugsweise als Bajonettdrahtbügel ausgeführt und vorzugsweise mit der Haube 7 verlötet oder verschweisst, vorzugsweise punktgeschweisst.

Sind die Haube 7 und die Bodenschale 2, so wie in Fig. 1a gezeigt, aufeinandergesetzt, so befindet sich über dem Halteelement 11 ein ebenfalls in der Mitte des Bodens 2 an der Bodenaußenseite 2a angebrachtes Verbindungselement 12. Erfindungsgemäß sind das Halteelement 11 und das Verbindungselement 12 kraftschlüssig miteinander verbindbar. Vorzugsweise ist das Verbindungselement 12 als Teil eines Bajonettsystems ausgeführt, vorzugsweise umfasst das Verbindungselement 12 eine Flachfeder 13, eine Scheibe 14 sowie eine in die Scheibe eingesetzte Befestigungsschraube 15 und eine Halteplatte 16. Die Befestigungsschraube 15 durchsetzt eine am Boden 2 der Bodenschale 1 angebrachte Bohrung 17 und wird am Boden 2 mit einer innenseitig angebrachten Mutter 17 befestigt. Die Halteplatte 16 greift mit Haltenasen 16a, 16b in Abschnitte 11a, 11b des Halteelementes 11 so ein, dass eine kraftschlüssige Verbindung zwischen dem Verbindungselement 12 und dem Halteelement 11 hergestellt ist. Im Rahmen der vorliegenden Erfindung ist die Flachfeder 13 aus einem hitzebeständigen Material, vorzugsweise einer hochtemperaturfesten metallenen Legierung hergestellt.

In einer in Fig. 1b dargestellten Ausführungsform der vorliegenden Erfindung sind das Halteelement 11 und das Verbindungselement 12 als Schraubverbindung ausgeführt. Dabei durchsetzt eine Schraube 18 eine mittig in dem gewölbten Abschnitt 9 angebrachte Bohrung 19 mit ihrem Schaft 18a in Richtung der Bodenaußenseite 2a der Bodenschale 1, um auch die darin vorgesehene Bohrung 17 zu durchsetzen. Der Schaft 18a der Schraube 18 wird von einer, vorzugsweise als Flügelmutter ausgeführten Mutter 20 aufgenommen.

Nach Fig. 1b weist die Haube 7 einen, dem oberen Abschnitt 8 gegenüberliegenden Rand 21 auf, der eine Unterseite 21a der Haube 7 begrenzt. Zwischen dem oberen Bereich 8 und dem Rand 21 verläuft ein sich zum Rand 21 hin bogenförmig verbreiternder Wandabschnitt 22 der Haube 7. Am Rand 21 weist die Haube 7 einen am Wandabschnitt 22 angesetzten Kragen 23 auf. An der Unterseite 21a weist der Randabschnitt 21 bogenförmige Ausnehmungen 24 auf. Die bogenförmigen Ausnehmungen 24 werden von Auflageabschnitten 25 begrenzt. Die Auflageabschnitte 25 sind dabei nach Fig. 1b zur Auflage der Haube 7 auf einer Unterlage 26 bestimmt. Erfindungsgemäß sind die bogenförmigen Ausnehmungen 24 entlang des Umfangs des vorzugsweise kreisförmigen Randabschnittes jeweils so angebracht, dass sie in der Auflage ebene einen Winkel von 180° einschließen.

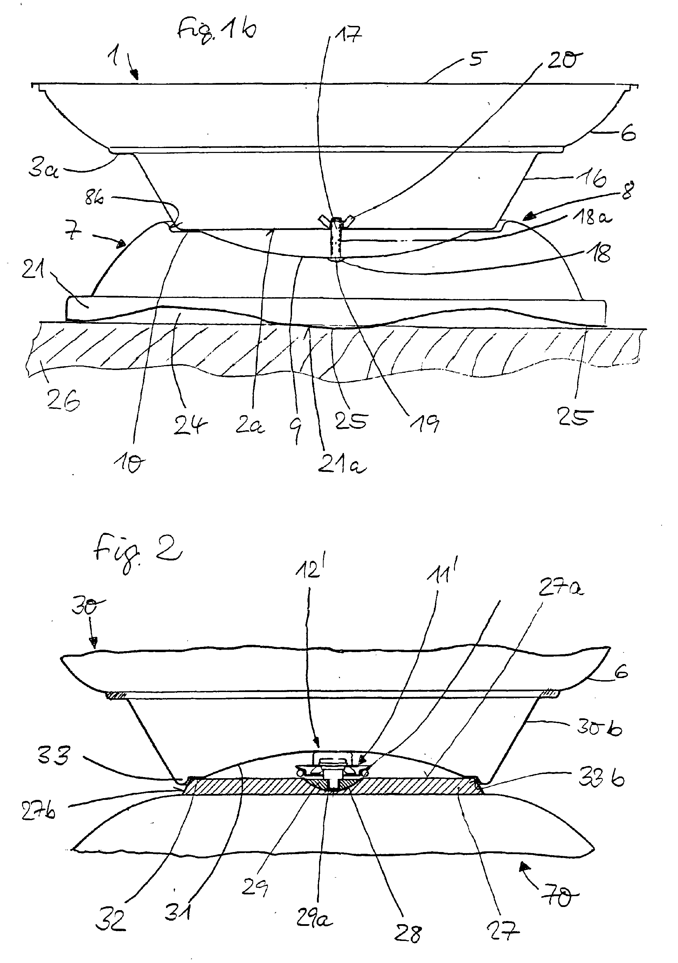

Bei einer in der Fig. 2 dargestellten zweiten Ausführungsform des erfindungsgemäßen Gargerätes ist die Haube 7 als Wokhaube ausgebildet. Dazu ist am oberen Abschnitt 8 ein hitzebeständiger Abschnitt 27 außenseitig angebracht. Vorzugsweise ist der hitzebeständige Abschnitt 27 ein mit Edelstahl verkapselter pressgeschweißter Aluminiumbodenabschnitt. Der Abschnitt 27 hat nach Fig. 2 eine von der Haube 7 abgewandte Begrenzungsfläche 27a. Von der Begrenzungsfläche 27a verläuft in einem stumpfen Winkel in Richtung auf die Haube 7 ein ebener Begrenzungsrand 27b. Der vorzugsweise kreisförmige Abschnitt 27 weist in seiner Mitte eine bogenförmige Ausnehmung 28 auf.

Die Ausnehmung 28 ist vorzugsweise von einer Anschweissmutter 29, vorzugsweise aus Edelstahl ausgefüllt. Ein Innengewindeabschnitt 29a der Anschweissmutter 29 dient der Befestigung eines Bajonettsystems-Teils 11' nach Fig. 1a. Das Verbindungselement ist dann als dazu passender Bügel 12' ausgebildet. Eine Bodenschale 30 weist nach Fig. 2 einen nach innen gewölbten Bereich 31 auf, der von einem kragenartigen zweiten Bodenabschnitt 32 umgeben ist. Zwischen dem kragenartigen Abschnitt 32 und der Umrandung 30b befindet sich ein Randstreifen 33.

Nach Fig. 2 umgibt der Randstreifen 33 bei auf eine Haube 70 aufgesetzter Bodenschale 30 den Begrenzungsrand 27b des Bodenabschnitts 27 mit einer Anlagefläche 33b. Der nach innen gewölbte Bereich 31 der Bodenschale 30 weist nach Fig. 2a einen Bügel 12' auf, mit dem ein Bajonettsystem kraftschlüssig verbunden werden kann.

Das erfindungsgemäße Gargerät nach Fig. 3 weist zwischen Haube 7 und Bodenschale 1 eine halbrund ausgebildete Schutzwand 40 auf. Die Schutzwand 40 ist mit Nasenabschnitten 41 in Schlitze an dem oberen Schalenabschnitt eingesetzt. Die Schutzwand 40 weist parallel zum oberen Abschnitt 8 der Haube 7 angebrachte längliche Öffnungen 42 und in Fig. 4 gezeigte Schlitze 43 auf, über welche ein Grillrost mit entsprechenden Vorsprüngen eingehängt werden kann.

Das als Grill (34) ausgeführte erfindungsgemäße Gargerät ist nach Fig. 3 mit seiner Bodenschale 1 mit einem erfindungsgemäßen Gestell 50 verbunden. Vorzugsweise ist das Gestell 50 aus metallenen Materialien wie etwa Aluminium gebildet. Beine 51 des erfindungsgemäßen Gestelles 50 liegen mit einem Mantelabschnitt 51a an der Umrandung 1b des unteren Schalenabschnittes 4 an. Die Bodenschale 1 liegt mit einem Abschnitt 3a auf einer stumpfwinklig zur Längsachse des Beines 51 verlaufenden Schnittfläche 51b. Die Beine 51 weisen einen Durchgang 52 auf, der ihren Mantelabschnitt 51a durchdringt. Nach Fig. 3 weist die erfindungsgemäße Bodenschale 1 an einer der Position des Durchgangs 52 entsprechenden Stelle eine Bohrung 53 auf, durch welche eine Schraube 54 mit einem Schaftabschnitt 54a und gleichzeitig den Durchgang 52 durchsetzend durchgesteckt ist. An der der Schale abgewandten Mantelseite des Beines 51c ist eine Mutter, vorzugsweise eine Flügelmutter 55 auf den Schaftabschnitt 54a der Schraube 54 zur Befestigung geschraubt. Das erfindungsgemäße Gestell weist eine Manschette 56 auf. Dabei ist die Manschette 56 die Beine umgebend jeweils zwischen einem Standabschnitt 51d und dem Aufnahmeabschnitt 51e vorgesehen.

Die Manschette 56 weist vorzugsweise einen dreieckigen Querschnitt auf. Die Manschette 56 umgibt die Beine 51 sowohl in einem Tragezustand, siehe Fig. 3, und auch in einem Transportzustand mit einem dreieckigen Durchgang 57. Erfindungsgemäß sind die Beine 51 vom Transportzustand in den Tragezustand schwenkbar. Die Manschette 56 weist Bohrungen 58 auf, durch die an den Beinen zwischen dem Standabschnitt 51c und dem Aufnahmeabschnitt 51e angebrachte Befestigungsstege 59 durchgesteckt sind. Erfindungsgemäß ist die Manschette 56 als Stanzteil mit umgebogenem Randstreifen 60 ausgeführt. Nach Fig. 7 ist der Randstreifen 60 an Ecken 57a, 57b und 57c so umgebogen, dass stumpfwinklige Kehlen 61 jeweils von dem Randstreifen 60 umgeben werden, siehe Fig. 7 und Fig. 8.

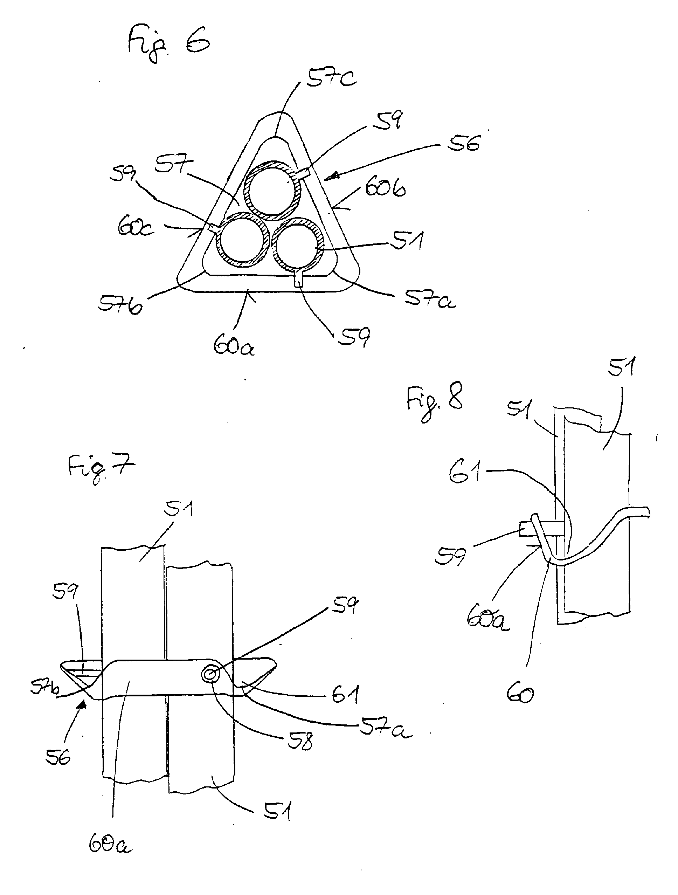

Nach Fig. 6, 7 weist der Randstreifen 60 zwischen den Kehlen 61 bzw. den Ecken 57a bis 57c jeweils eine Bohrung 58 auf. Die Bohrungen 58 werden von Befestigungsstegen 59 durchsetzt. Nach Fig. 8 bildet der Randstreifen 60 jeweils einen spitzen Winkel mit der Längsachse des Beines 51. Die Befestigungsstege 59 treten vorzugsweise rechtwinklig aus der Mantelfläche 51a des Beines 51 hervor. Vorzugsweise sind die Befestigungsstege 59 mit den Beinen 51 verschraubt.

Erfindungsgemäß bilden die Befestigungsstege 59 Anschlagbereiche für Randstreifenaußenseiten 60a bis 60c, in dem die Befestigungsstege 59 die Bohrungen 58 in einem Winkel kleiner als 90° durchsetzen und in einer Richtung senkrecht zur Mantelfläche 51a der Beine 51 die Randstreifenaußenseiten 60a bis 60c jeweils nach außen überragen.

Die Erfindung ist nicht auf die beschriebenen Ausführungsbeispiele beschränkt, die in vielfacher Art und Weise abgewandelt werden können. So können das Halteelement 11 und das Verbindungselement 12 anders als dargestellt, etwa in Form von Haken und Ösen ausgeführt sein. Im Rahmen der Erfindung ist es allerdings inbegriffen, dass die beiden kraftschlüssig miteinander verbunden werden können.

Des Weiteren ist auch eine andere als die bogenförmige Form der Ausnehmungen 24 an der Haube 7 im Rahmen der Erfindung denkbar. So können an Stelle der Ausnehmungen 24 zur Durchlüftung auch längliche Schlitze an der Haube 7 angebracht sein. Die nach innen gewölbten Bereiche 9 der Haube 7 und 31 der Bodenschale 30 können auch anders als dargestellt nach innen ausgedehnt sein. Denkbar sind ovale Auswölbungen. Dabei muss lediglich im übereinander gestapelten Zustand von Haube und Bodenschale zwischen diesen Teilen ein für die Aufnahme eines Verbindungselementes 12 und eines entsprechenden Halteelementes 11 ausreichender Hohlraum gewährleistet sein. Der Hohlraum kann auch von gerade verlaufenden Flächen begrenzt sein.

Die Haube 7 und/oder die Bodenschale 1, 30 können auch mit ovalem oder auch mehreckigem Querschnitt oder einer Kombination verschiedener Querschnitte ausgeführt sein. Die Beine 51 des Gestells 50 können auch anders als rohrförmig sein. Denkbar ist ein mehreckiger Rohrquerschnitt, wobei im Rahmen der Erfindung der die Beine umgebende Durchgang der Manschette einem solchen Querschnitt angepasst sein muss.

Die Verbindung des erfindungsgemäßen Gestelles und der Bodenschale zur Realisierung einer erfindungsgemäßen Grilleinrichtung kann anders als durch die in Fig. 3, 5 dargestellte Schraubverbindung realisiert sein. Denkbar ist auch hier etwa ein Bajonettverschluss oder ein Schnappverschluss oder die Verbindung über Rastnasen.

Es versteht sich, dass der Randabschnitt 21 der Haube 7 an der Unterseite 21a passgenau zur Oberseite 5 der Bodenschale 1 geformt ist. Dadurch ist ein beim Garen oder etwa Kochen gewünschter dampfdichter Abschluss der Bodenschale erreichbar.

Schließlich und endlich versteht sich, dass die einzelnen Merkmale der Erfindung auch in anderen als den dargestellten und beschriebenen Kombinationen verwendet werden können.

## Patentansprüche

1. Gargerät mit einer Bodenschale und einer Haube, bei welchem die Bodenschale einen Boden aufweist,
**dadurch gekennzeichnet,**
**dass** die Bodenschale (1, 30) mit deren Boden (2) auf die Haube (7, 70) stellbar ist.

2. Gargerät nach Anspruch 1, **dadurch gekennzeichnet,**
**dass** die Haube (7, 70) einen oberen Abschnitt (8) aufweist und dass der obere Abschnitt (8) und der Boden (2) formschlüssig miteinander verbindbar sind.

3. Gargerät nach Anspruch 2, **dadurch gekennzeichnet,**
**dass** ein Halteelement (11) an der Haube (7, 70) und/oder an dem oberen Abschnitt (8) befestigbar ist.

4. Gargerät nach einem der Ansprüche 1 bis 3,
**dadurch gekennzeichnet,**
**dass** die Bodenschale (1, 30) und die Haube (7, 70) einen kreisförmigen Querschnitt aufweisen.

5. Gargerät nach einem der Ansprüche 1 bis 4,
**dadurch gekennzeichnet,**
**dass** an dem Boden (2) ein Verbindungselement (12) vorgesehen ist, welches mit dem Halteelement (11) kraftschlüssig verbindbar ist.

6. Gargerät nach Anspruch 5, **dadurch gekennzeichnet,**
**dass** der Boden (2) als ebene Fläche ausgebildet ist, in deren Mitte das Verbindungselement (12) angebracht ist.

7. Gargerät nach Anspruch 5 oder 6,
**dadurch gekennzeichnet,**
**dass** das Verbindungselement (12) als Teil eines Bajonett-Haltesystems (13, 14, 15, 16) ausgebildet ist.

8. Gargerät nach einem der Ansprüche 5 bis 7,
**dadurch gekennzeichnet,**
**dass** das Verbindungselement (12') als Bügel ausgebildet ist, welcher mit dem Halteelement (11') in kraftschlüssigen Eingriff bringbar ist.

9. Gargerät nach einem der Ansprüche 5 bis 8,
**dadurch gekennzeichnet,**
**dass** das Verbindungselement als Bohrung (19) ausgebildet ist, in welche eine Schraube (18) eingesetzt ist, und das Halteelement einen Innengewindeabschnitt (20) umfasst, welcher an der Haube (7) befestigt ist.

10. Gargerät nach einem der Ansprüche 5 bis 8,
**dadurch gekennzeichnet,**
**dass** das Halteelement eine Bohrung und eine die Bohrung durchsetzende Schraube umfasst und das Verbindungselement ein die Schraube im Innern der Bodenschale aufnehmendes Innengewinde umfasst.

11. Gargerät nach einem der Ansprüche 2 bis 9,
**dadurch gekennzeichnet,**
**dass** der obere Abschnitt (27) der Haube (70) als hitzebeständiger Abschnitt ausgebildet ist.

12. Gargerät nach Anspruch 11, **dadurch gekennzeichnet,**
**dass** die Haube als Wok (70) ausgebildet ist.

13. Gargerät nach einem der Ansprüche 1 bis 12,
**dadurch gekennzeichnet,**
**dass** der Boden (2) einen nach innen gewölbten ersten Bodenabschnitt (31) aufweist, welcher von einem kragenartigen zweiten Bodenabschnitt (32) umgeben ist.

14. Gargerät nach einem der Ansprüche 2 bis 11,
**dadurch gekennzeichnet,**
**dass** der obere Abschnitt (8) einen nach innen gewölbten ersten Bereich (9) aufweist, welcher von einem kragenartigen zweiten Bereich (10) umgeben ist.

15. Gargerät nach Anspruch 13 und 14,
**dadurch gekennzeichnet,**
**dass** die Bodenschale mit dem kragenartigen zweiten Bodenabschnitt (32) auf den kragenartigen zweiten Bereich (10) der Haube (7) stellbar ist.

16. Gargerät nach einem der Ansprüche 1 bis 14,
**dadurch gekennzeichnet,**
**dass** das Gargerät ein Griffelement für die Haube umfasst.

17. Gargerät nach Anspruch 16, **dadurch gekennzeichnet,**
**dass** das Griffelement mit dem Halteelement verbindbar ist.

18. Gargerät nach Anspruch 17, **dadurch gekennzeichnet,**
**dass** das Griffelement kraftschlüssig mit dem Halteelement verbindbar ist.

19. Gargerät nach einem der Ansprüche 1 bis 18,
**dadurch gekennzeichnet,**
**dass** das Gargerät als Grill (34) ausgebildet ist, wobei die Bodenschale (2) als Feuerschale ausgebildet ist.

20. Gargerät nach einem der Ansprüche 1 bis 19,
**dadurch gekennzeichnet,**
**dass** das Gargerät an der Bodenschale (2) Befestigungselemente (53, 54) zur Befestigung des Gargerätes an einem Gestell (55) aufweist.

21. Gestell, insbesondere für ein Gargerät nach einem der Ansprüche 1 bis 20, mit wenigstens zwei Beinen und mit einem, zum Führen der Beine ausgebildeten Führungselement, wobei die Beine einen Standabschnitt und einen, dem Standabschnitt gegenüberliegenden Aufnahmeabschnitt aufweisen,
**dadurch gekennzeichnet,**
**dass** die Beine (51) von dem jeweils zwischen dem Standabschnitt (51d) und dem Aufnahmeabschnitt (51e) vorgesehenen Führungselement (56) umgeben sind, und
**dass** die Beine (51) durch eine Schwenkbewegung um das Führungselement (56) aus einer Transportstellung in eine Standstellung bringbar sind.

22. Gestell nach Anspruch 21, **dadurch gekennzeichnet,**
**dass** die Beine im Transportzustand parallel zueinander angeordnet sind und/oder im Tragezustand die Standabschnitte (51d) und die Aufnahmeabschnitte (51e) jeweils voneinander weggeschwenkt sind.

23. Gestell nach Anspruch 21 oder 22,
**dadurch gekennzeichnet,**
**dass** das Führungselement als Manschette (56) ausgebildet ist, welche die Beine (51) in einem von dieser definierten Durchgang (57) aufnimmt.

24. Gestell nach Anspruch 23, **dadurch gekennzeichnet,**
**dass** die Manschette (56) einen dreieckigen Durchgang (57) aufweist.

25. Gestell nach Anspruch 23 oder 24,
**dadurch gekennzeichnet,**
**dass** die Manschette (56) als Stanzteil mit umgebogenem Rand (60) ausgebildet ist, wobei der Rand (60) Bohrungen (58) zur Aufnahme eines Befestigungsteges (59) der Beine (51) aufweist.

26. Gestell nach einem der Ansprüche 21 bis 25,
**dadurch gekennzeichnet,**
**dass** die Beine (51) rohrförmig ausgebildet sind.

27. Gestell nach einem der Ansprüche 21 bis 26,
**dadurch gekennzeichnet,**
**dass** der Aufnahmeabschnitt (51e) als zur Längsachse stumpfwinkelig verlaufende Schnittfläche (51b) umfasst.

28. Gestell nach einem der Ansprüche 21 bis 27,
**dadurch gekennzeichnet,**
**dass** der Aufnahmeabschnitt (51e) einen die Mantelfläche (51a) des Beines (51) senkrecht zur Längsachse durchsetzenden Durchgang (52) aufweist, wobei der Durchgang (52) zur Aufnahme eines Befestigungsmittels (54) ausgebildet ist.

29. Gestell nach einem der Ansprüche 21 bis 28,
**dadurch gekennzeichnet,**
**dass** das Gestell (50) zur Aufnahme eines Gargerätes (1, 30; 7, 70) nach einem der Ansprüche 1 bis 19 in der Standstellung ausgebildet ist.

30. Grilleinrichtung, umfassend ein Gargerät (1, 30; 7, 70) nach einem der Ansprüche 1 bis 20 und ein Gestell (50) nach einem der Ansprüche 21 bis 29.
